# EUROPEAN PATENT SPECIFICATION

(11) **EP 1 025 473 B1**
(45) Date of publication and mention of the grant of the patent: **19.12.2001**
(21) Application number: 98955497.7
(22) Date of filing: 14.10.1998
(51) Int. Cl.: G05D 23/02, F16K 47/02, F16K 1/36

(54) **FLOW CONTROL VALVES**
DURCHFLUSSREGELVENTILE
VALVES DE REGULATION DE DEBIT

(30) Priority: 23.10.1997 GB 9722303
(43) Date of publication of application: 09.08.2000
(73) Proprietor: Myson Heating Controls Limited, County Limerick (IE)
(72) Inventor: NOLAN, Richard, Newcastlewest County Limerick (IE); ROWLEY, Patrick, Abbeyfeale County Limerick (IE); HICKEY, James, Ballingarry County Limerick (IE)
(74) Representative: Meeks, Frank Burton
(86) International application number: EP9806650
(87) International publication number: WO9922282

(56) References cited:
- EP-A- 0 533 514
- EP-A- 0 666 521
- DE-A- 19 643 902
- US-A- 3 027 134
- US-A- 3 276 741
- US-A- 3 658 291
- US-A- 4 202 526

## Description

This invention relates to flow control valves and relates more specifically to thermostatic radiator valves (TRV's) for use in hot water central heating systems. The invention is particularly related to so-called bi-directional flow TRV's.

The use of a bi-directional flow TRV allows the valve to operate normally regardless of the direction of flow of water through the valve, and allows the valve to be fitted to either end of a central heating radiator in either the horizontal or vertical position without loss of performance.

With traditional TRV designs the flow of water must follow the direction of the arrow provided on the valve body otherwise the valve can become prone to hammering and chattering. If this happens the only solution is to remove the valve and change its position to follow the flow direction arrow. This can result in high costs for installers who have to return to sites to rectify the problem.

The use of a bi-directional flow TRV design means that the valve is not flow directionally sensitive and should result in significantly reduced call back charges for installers. This is particularly relevant in replacement or upgrade situations where the inlet and outlet pipes are not always easily identifiable.

Previous attempts at providing a bi-directional TRV have been only partially effective in eliminating vibration in the valve such that some hammering and chattering still occurs.

US Patent Specification No. 3276741 discloses a valve body comprising an annular seat and a valve stem guide portion having an opening therethrough. A valve stem makes a sliding fit through the opening and a central plate portion of a support plate is secured to one end of the valve stem by a rivet portion.

A valve disc made of an elastic material has a lower surface defining a sealing surface seatable on the seat.

When the valve stem is moved downwardly the valve disc closes the valve. When the valve stem is moved upwardly sufficiently from the seat, an upper sealing surface on the valve disc engages an underside annular surface of the valve stem guide means and provides an effective seal to prevent leakage along the valve stem outwardly of the valve body. There is however no disclosure or inference of the valve stem being spring mounted in the valve body, so that the valve disc is maintained in a valve open position relevant to the valve seat .

There is also no disclosure or inference in US patent specification No. 3276741 of a valve disc closure member being securely mechanically fixed to the spindle to reduce any vibrational effects in the valve when using the valve with bi-directional flow. In fact there is no mention of the valve being used for bi-directional flow.

EP 0666521 discloses a thermostatic valve hot water heating system in which the maximum flow rate of the heating medium can be set quickly and reliably by means of a one-piece presetting collar. If the valves of US 3276741 and EP 0666521 are used for bi-directional flow the valves become prone to hammering and chattering.

It is an object of the present invention to provide an improved form of a bi-directional flow TRV.

According to the present invention there is provided a thermostatic radiator valve comprising a valve body having a valve seat disposed between input and output connections to said valve, a valve closure member adjustably disposed adjacent said valve seat for controlling flow through said valve, a valve spindle mounted in said valve body on one end of which said valve closure member is disposed, whereby the valve is bi-directional, a thermostatic radiator valve head is mounted on said valve body and is operable on the other end of said valve spindle for controlling the operation of said valve, said valve closure member comprises an inner bush having an outer resilient member rigidly secured to it for contacting said valve seat, said bush being disposed on a reduced diameter end portion of said spindle and being rigidly attached to said spindle, and whereby the valve spindle is spring-mounted in the valve body by a spring acting at one end on a spring retainer secured to the spindle so that the resilient member is maintained in a valve open position relative to the valve seat; the bush, the spring retainer and the spindle being operable in combination to reduce vibrational effects in the valve.

In a preferred valve in accordance with the present invention, said resilient member is bonded to said bush, and said one end of said spindle is mechanically deformed e.g. by staking to retain said bush on said reduced diameter portion thereof.

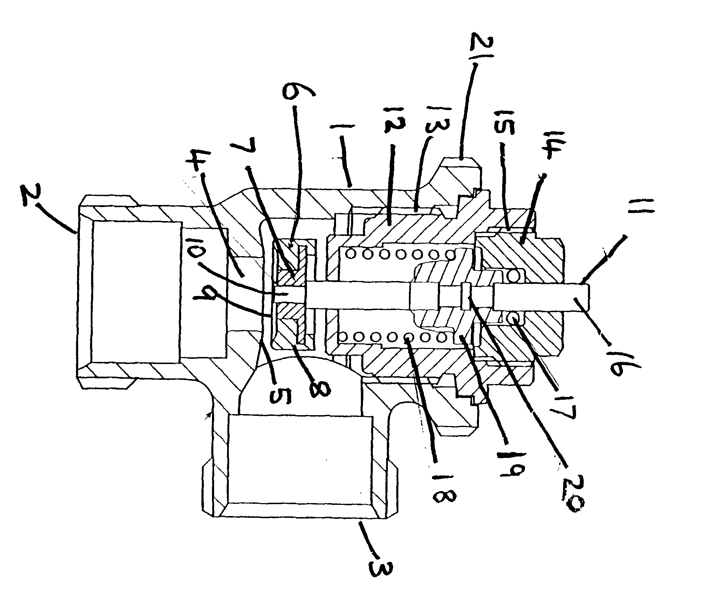

An exemplary embodiment of the invention will now be described, reference being made to the accompanying single figure drawing which is a cross-sectional view of a thermostatic radiator valve, apart from the valve head, in accordance with the present invention.

The valve shown in the drawing is designed for use with a conventional thermostatic radiator valve head which, for convenience, is not shown in the drawing.

The valve shown comprises a valve body 1 of substantially conventional form having a first input-output connection 2 and a second input/output connection 3. A passage 4 is provided in the valve body 1 between the input and output connections 2 and 3, the upper perimeter of the passage 4 constituting a valve seat 5.

Disposed above the valve seat 5 is a valve closure member 6 consisting of an inner bush 7, typically of brass, to the periphery of which is bonded a disc-shaped resilient e.g., rubber member 8, the lower peripheral surface 9 of which is contoured for making sealing contact with the valve seat 5.

The brass bush 7 of the closure member 6 is mounted on a reduced diameter end portion 10 of an operating spindle 11 the end of which is staked in order to securely fix the brass bush 7 and thus the closure member 6 on the spindle 11.

The operating spindle 11 is spring mounted in an insert body 12, typically made of brass, which is screwed into an upper aperture 13 in the valve body 1. The spindle 11 is retained in the insert body 12 by means of a retainer member 14 which is screwed into an upper aperture 15 in the insert body 12 and through the centre of which an upper end 16 of the operating spindle 11 extends.
An "O" ring seal 17 is provided between the spindle 11 and the retainer member 14 to prevent water leakage around the periphery of the spindle 11.

The operating spindle 11 is spring mounted in the insert body 12 by means of a spring 18 contained within the insert body 12 and which acts on a plastic spring retainer 19 which is moulded onto a central shouldered portion 20 of the spindle 11, the action of the spring 18 being to urge the operating spindle 11 in an upwards direction as viewed in the drawing, so that the closure member 6 is maintained in a valve open position relative to the valve seat 5.

The upper end 16 of the operating spindle 11 is acted upon in the usual way by a thermostatic radiator valve head (not shown) which in practice would be screwed onto the threaded upper part 21 of the valve body 1. The action of the valve head is to thermostatically control the position of the closure member 6 relative to the valve seat 5, to control flow between the input/output connections 2 and 3.

By ensuring that the disc-shaped resilient member 8 is securely bonded to the brass bush 7 and that the brass bush 7 is securely mechanically fixed to the operating spindle 11, any vibrational effects in the valve are greatly reduced.
This is further enhanced by ensuring that the spring retainer 19 is also firmly secured on the operating spindle 11.

The thermostatic radiator valve described with reference to the drawing therefore lends itself to connection in either end of a radiator installation with the consequent installation advantages.

The bi-directional flow TRV which has been described has been given by way of example only and although a so-called "angle" valve has been described, the invention is equally applicable to so-called "straight" and "inverted angle" valves, and to such valves of different sizes, e.g. 15mm, 25mm, etc.

## Claims

1. A thermostatic radiator valve comprising a valve body (1) having a valve seat (5) disposed between input and output connections (2,3) to said valve, a valve closure member (6) adjustably disposed adjacent said valve seat for controlling flow through said valve, a valve spindle (11) mounted in said valve body (1) on one end of which said valve closure member (6) is disposed, whereby the valve is bi-directional, a thermostatic radiator valve head is mounted on said valve body and is operable on the other end of said valve spindle (11) for controlling the operation of said valve, said valve closure member (6) comprises an inner bush (7) having an outer resilient member (8) rigidly secured to it for contacting said valve seat, said bush being disposed on a reduced diameter end potion (10) of said spindle and being rigidly attached to said spindle, and whereby the valve spindle is spring-mounted in the valve body by a spring (18) acting at one end on a spring retainer (19) secured to the spindle so that the resilient member (8) is maintained in a valve open position relative to the valve seat (5); the bush (7), the spring retainer (19) and the spindle (11) being operable in combination to reduce vibrational effects in the valve.

2. A valve as claimed in claim 1, in which said resilient member is bonded to said bush.

3. A valve as claimed in claim 1 or claim 2, in which said one end of said spindle is mechanically deformed to retain said bush on said reduced diameter portion thereof.

4. A valve as claimed in any preceding claim in which the spring is located in an insert (12) mounted in the valve body.

## Patentansprüche

1. Heizkörper-Thermostatventil, das einen Ventilkörper (1) aufweist, mit einem Ventilsitz (5), der zwischen einem Eingangsanschluss und einem Ausgangsanschluss (2, 3) des Ventils angeordnet ist, mit einem Ventilverschlussglied (6), das dem Ventilsitz benachbart verstellbar angeordnet ist, um den Fluss durch das Ventil zu steuern, mit einer Ventilspindel (11), die in dem Ventilkörper (1) angeordnet ist und an deren einem Ende das Ventilverschlussglied (6) angeordnet ist, wobei das Ventil in zwei Richtungen betreibbar ist, wobei ein Thermostatventilkopf an dem Ventilkörper montiert ist und an dem anderen Ende der Ventilspindel (11) ansetzt, um den Betrieb des Ventils zu regeln, wobei das Ventilverschlussglied (6) eine Innenbuchse (7) mit einem äußeren elastischen Element (8) aufweist, das an ihm fest gehalten ist, um mit dem Ventilsitz in Berührung zu kommen, wobei die Buchse an einem Endabschnitt (10) der Ventilspindel, der einen reduzierten Durchmesser aufweist, angeordnet und fest mit der Spindel verbunden ist und wobei die Ventilspindel in dem Ventilkörper durch eine Feder (18) federnd montiert ist, die an einem Ende an einem Federbefestigungselement (19) angreift, das mit der Spindel verbunden ist, so dass das federnde Element (8) in Bezug auf den Ventilsitz (5) in einer Ventil-Offenstellung gehalten ist, wobei die Buchse (7) das Federbefestigungselement (19) und die Ventilspindel (11) gemeinsam betätigbar sind, um Vibrationseffekte in dem Ventil zu reduzieren.

2. Ventil nach Anspruch 1, bei dem das elastische Element mit der Buchse verbunden ist.

3. Ventil nach Anspruch 1 oder 2, bei dem das eine Ende der Spindel zur Befestigung der Buchse an ihrem Abschnitt mit reduziertem Durchmesser mechanisch deformiert ist.

4. Ventil nach einem der vorhergehenden Ansprüche, bei dem die Feder in einem Einsatz (12) angeordnet ist, der in dem Ventilkörper montiert ist.

## Revendications

1. Vanne de radiateur thermostatique comprenant un corps de vanne (1) ayant un siège de vanne (5) disposé entre des liaisons d'entrée et de sortie (2, 3) vers ladite vanne, un organe de fermeture de vanne (6) s'étendant de façon ajustable et adjacente par rapport audit siège de vanne pour régler le débit au travers de ladite vanne, une tige de vanne (11) montée dans ledit corps de vanne (1) à l'extrémité duquel ledit organe de fermeture de vanne (6) s'étend, la vanne étant bi-directionnelle, une tête de vanne de radiateur thermostatique étant montée sur ledit corps de vanne et étant actionnable à l'autre extrémité de ladite tige de vanne (11) pour commander le fonctionnement de ladite vanne, ledit organe de fermeture de vanne (6) comprenant une douille interne (7) qui présente un organe élastique externe (8) fixé rigidement à celle-ci pour coopérer avec ledit siège de vanne, ladite douille étant disposée sur une partie d'extrémité (10) de diamètre réduit de ladite tige et étant fixée rigidement à ladite tige, et la tige de vanne étant montée élastiquement dans le corps de vanne au moyen d'un ressort (18) agissant à une extrémité sur un organe de maintien de ressort (19) fixé à la tige, de sorte que l'organe élastique (8) est maintenu dans une position ouverte de vanne par rapport au siège de vanne (5) ; la douille (7), l'organe de maintien du ressort (19) et la tige (11) étant actionnables de façon combinée pour réduire les effets de vibration dans la vanne.

2. Vanne suivant la revendication 1, **caractérisée en ce que** ledit organe élastique est relié à ladite douille.

3. Vanne suivant la revendication 1 ou 2, **caractérisée en ce que** ladite première extrémité de ladite tige est déformée mécaniquement de façon à retenir ladite douille sur ladite partie de diamètre réduit de ladite tige.

4. Vanne suivant l'une quelconque des revendications précédentes, **caractérisée en ce que** le ressort est logé dans un insert (12) monté dans le corps de vanne.
